Europäisches Patentamt

European Patent Office

Office européen des brevets

(19)

(11) Publication number : **0 640 466 A1**

(12) **EUROPEAN PATENT APPLICATION**

(21) Application number : **94305442.9**

(22) Date of filing : **22.07.94**

(51) Int. Cl.[6] : **B29C 70/50,** B29C 70/08,
// B29K101:12

(30) Priority : **11.08.93 US 105725**

(43) Date of publication of application :
**01.03.95 Bulletin 95/09**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **Dunton, Thomas Paul**
**Rt. 22 - P O Box 27**
**Lebanon Springs, New York 12114 (US)**
Inventor : **Teutch, Erich Otto**
**488 Summit Road**
**Richmond, Massachusetts 01254 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Process for compression moulding of a melt impregnated multilayer article.**

(57) The present invention is directed to a continuous process for producing a fiber reinforced thermoplastic resin article having a high concentration of thermoplastic resin on at least one surface thereof. The continuous process of this invention comprises continuously applying a thermoplastic resin on at least one surface of a fiber mat core, continuously applying a second thermoplastic resin on at least one surface of the combination of fiber mat core and the first thermoplastic resin, passing the combination to a molding zone, and then molding the combination thereof under heat and pressure into a finished article. The finished article can have a Class A surface, if desired, or a mat finish. The finished article also has a high concentration of the second thermoplastic resin on at least one surface thereof, depending on whether or not the second thermoplastic resin is applied on one or both surfaces of the fiber mat core.

EP 0 640 466 A1

FIELD OF THE INVENTION

The present invention relates to a continuous process for producing a fiber reinforced thermoplastic resin article. The finished article can have a Class A surface, if desired, depending on the finish of the mold surfaces. While a Class A surface does not have a universally accepted definition or specification, one accepted definition is a glossy, smooth and polished surface which should be as smooth as that of a current automobile exterior part made from sheet metal. Another definition is that the visible surface of the article in the finished state is free of exposed glass fibers, flash, sharp edges, visible parting lines, crazing, porosity, hair line cracks, blisters, and obvious repairs.

Briefly, the continuous process of this invention comprises continuously applying a thermoplastic resin on at least one surface of a fiber mat core, continuously applying a second thermoplastic resin on at least one surface of the combination of fiber mat core and the first thermoplastic resin, passing the combination to a molding zone, and then molding the combination thereof under heat and pressure into a finished article. The finished article can have a Class A surface, if desired, depending upon the finish of the mold surface. The finished article also has a high concentration of the second thermoplastic resin on at least one surface thereof, depending on whether or not the second thermoplastic resin is applied on one or both surfaces of the fiber mat core.

The continuous process of this invention provides a process for the continuous production of fiber reinforced thermoplastic resin articles that find such uses as automobile exterior panels (fenders, hoods, trunk lids, etc.), roofing tiles, siding for buildings, etc.

Background of the Invention

Producing finished articles that have a high concentration of thermoplastic resin on the surface thereof is known in the art as disclosed in U.S. Patent 4,983,247 and also described in other U.S. patents, particularly U.S. Patent No. 4,859,524 and U.S. Patent No. 4,716,072. While these references disclose producing articles of thermoplastic resin and fiber reinforcement and further disclose that such articles have a resin rich surface which may be a Class A surface, the references nevertheless disclose essentially a batch process for forming the articles.

U.S. Patent 4,983,247 discloses forming a composite that can have a Class A surface by forming a fiber free layer of a first thermoplastic resin and juxtaposing with a layer at least a portion of a thermoplastic blank comprising a second thermoplastic resin in a fibrous reinforcing material, heating a blank of the article and then compressing together to form the finished sheet.

Detailed Description of the Invention

In accordance with the present invention, there is provided a continuous process for producing fiber reinforced thermoplastic resin articles by molding thereof, which articles are not just compressed sheets of resin and reinforcing fibers, but are molded into the end or finished product such as roof tile, siding for buildings, automobile panels, etc. They are not subsequently further processed into articles as generally with composites. The finished articles of this invention can have a Class A surface if desired.

In its broadest scope, the continuous process of this invention comprises continuously applying a first thermoplastic resin onto at least one surface a fiber mat core, continuously applying a second thermoplastic resin onto at least one surface of the combination of the fiber mat core and first thermoplastic resin, passing the combination of the fiber mat core with the first and second thermoplastic resin to a molding zone and then molding the combination thereof under heat and pressure into a molded thermoplastic resin fiber reinforced article having on at least one surface thereof a high concentration of the second thermoplastic resin. The temperature of the mold in the preferred compression molding zone may be and is preferably below the melt temperature of the thermoplastic resins employed in this process.

In a more specific embodiment of this invention, the process comprises (1) continuously applying a first thermoplastic resin film onto at least one surface of a fiber mat core, (2) then heating the fiber mat core and first resin film to a temperature and for a time sufficient to melt the thermoplastic resin film and to also heat the fiber mat core to processing temperature, which is namely heating the fiber mat core throughout to the thermoplastic resin processing temperature of at least 350°F, but preferably above the softening or melting temperature of the thermoplastic resins, (3) passing the combination to a zone wherein a second thermoplastic resin in melted form is continuously applied to at least one surface of the fiber mat core and first thermoplastic resin, preferably the second resin being applied over the first resin, and (4) passing the combination of heated fiber mat core and first and second thermoplastic resin to a molding zone wherein the combination or preferably compression molded under heat and pressure into the finished article having on at least one surface thereof a high concentration of the second thermoplastic resin. The thermoplastic resin processing temperature, as stated above, is preferably above the melting or softening temperature of the thermoplastic resins being employed herein.

Alternatively, the fiber mat core can be first heated to processing temperature which would be sufficient to melt the first thermoplastic resin film. A first thermoplastic resin in film form is then continuously applied to at least one surface of the heated fiber mat core, which is then passed to a zone wherein the second thermoplastic resin in melted form is continuously applied to at least one surface of the heated fiber mat core and first thermoplastic resin, and then the combination is transferred to the molding zone, wherein the finished article is prepared, preferably, by compression molding under heat and pressure.

Other variations may be employed herein such as the first thermoplastic resin can be applied in the melted state by either coating or extrusion onto a heated fiber mat core. The second thermoplastic resin can then be applied as a film at essentially room temperature onto at least one surface of the combination of heated fiber mat core and the melted first thermoplastic resin, preferably onto the surface of the first thermoplastic resin. It may be necessary to heat the combination of fiber mat core and the first and second thermoplastic resin prior to molding if the residual heat of the heated fiber mat core and first melted thermoplastic resin is not sufficient to melt the second thermoplastic resin applied in film form. This might occur where the second resin has a higher melting temperature or higher molecular weight or some cooling may have resulted, or it could be a combination of any of these factors.

Additionally, as another embodiment, each thermoplastic resin, i.e. the first and second thermoplastic resin, can be in film form, both of which may be applied at essentially room temperature or above room temperature, but below their nelting temperatures. Employing films would require heating of the fiber mat core or fiber mat core and first resin film or fiber mat core and first and second resin film prior to molding of the combination into the finished molded article. Just prior to molding, the first and second thermoplastic resins must be in the melted or molten state when employing this embodiment.

In another embodiment of this invention, the first and/or second thermoplastic resin may be in powdered form when applied to the fiber mat core. In such an embodiment, the powdered thermoplastic resin would need to be melted either from the heated fiber mat core or subsequently, but prior to molding.

While other combinations may become obvious to those skilled in the art, it is a necessary feature of this invention that at least one of the thermoplastic resins be applied in film or powdered form, at least at about room temperature, but can be applied at an elevated temperature, providing, in the case of a film, the temperature of the film is below the melting temperature of the resin. In addition, the first thermoplastic resin is so formulated, i.e. molecular weight or intrinsic viscosity, etc., so as to impregnate the fiber mat core. This is commonly known as "wet out" of the fibers in order to provide bonding of the fibers of the fiber mat core. This bonding of the fibers of the fiber mat core is in addition to the "binder" resins or agents used by the fiber manufacturers during manufacturing of the fiber mat. A binder resin or agent is generally used in an amount to sufficiently hold the fibers together so as to provide body to the fiber mat for handling purposes. The "binder" resin or agent should be compatible with the thermoplastic resins being employed in the practice of this invention and, preferably, aide in "wetting-out" of the fibers of the fiber mat core with the thermoplastic resin used in impregnating the fiber mat core. This procedure is well known to the fiber mat manufacturers.

In the molding zone, there is sufficient residual heat in the fiber mat to maintain the first thermoplastic resin molten during molding such that the molding pressure will force the first thermoplastic resin, which has now been melted or is in the molten state, into the fiber mat, thereby wetting or coating the fibers thereof. Also, during molding, the second thermoplastic resin, which has also been melted or is in the molten state and which may be on the top and/or bottom of the fiber mat core will essentially remain on or at the surface of the fiber mat. It is preferable that the second thermoplastic resin be applied onto the first thermoplastic resin. During molding, the temperature of the mold surface is generally below the melting or softening temperature of the second thermoplastic resin extruded onto the fiber mat core, thereby chilling or solidifying the second thermoplastic resin on the surface of the resin impregnated fiber mat core, but not enough to chill the first thermoplastic resin before it impregnates the fiber mat core. This results in a finished article having a surface that has a high concentration of thermoplastic resin. Preferably, molding is by compression molding. However, disclosed hereinafter is another molding process referred to as "roll forming" which may, in effect, be considered a form of compression molding.

In the practice of this invention, it may be desirable to employ a low molecular weight or a low viscosity first thermoplastic resin for impregnating the fiber mat core because of the ease of flow of the resin. The second thermoplastic resin may be of a higher molecular weight or a higher viscosity resin which would minimize penetration of the second thermoplastic resin into the fiber mat core. Also, the use of a higher molecular weight thermoplastic resin in the surface of the finished article so produced by the process of this invention results in a finished article having better mechanical properties, better surface weather-ability and may exhibit better chemical resistance.

The surface of the molded article prepared in accordance with this invention can be a Class A surface, if desired, by providing smooth surfaces on the inside of the mold face itself. Alternatively, if a rough or non-glossy or grainy surface is wanted, such as for roof tile, then the inside surfaces of the mold can be so roughened or etched or so prepared as to impart the desired surface characteristics to the surface of the finished article. In fact, the surface of the mold may be dusted with an inorganic or high melting powder in order to obtain a rough or dull or irregular surface. The powder should, preferably, be insoluble in the thermoplastic resin and should not melt at the molding temperature employed. Also, in order to obtain a decorative finish which may be, for example, either rustic or antique in appearance, powdered pigment or a blend of powdered pigment and thermoplastic resin powder may be applied to at least the surface of the combination of fiber mat core and thermoplastic resin having the high concentration of thermoplastic resin either prior to or during molding. A decorative affect is thus obtained. In any case, the surface of the molded finished article should be free of fibers from the fiber mat core.

Alternatively, in another embodiment of the process of this invention, a "wet-out" roll zone may be employed to impregnate the fiber mat core with the first thermoplastic resin between the zone where the first thermoplastic resin is applied to the fiber mat core and the zone where the second thermoplastic resin is applied. The "wet-out" roll zone can consist of at least one pair or opposing heated "wet-out" rolls, the surfaces of which are heated to a temperature sufficiently low enough to avoid sticking of the first thermoplastic resin where it is in the melted or molten state to the surface of the rolls, but yet high enough to avoid excessive chilling of the first thermoplastic resin. Some chilling of the surface interface of the melted or molten resin and the roll surface may occur, but the temperature of the surface of the rolls should not be so low as to cause excessive chilling at the interface of the resin surface and the roll surface, which would tend to lessen the impregnation of the fiber mat core with the first melted or molten thermoplastic resin. Although some momentary chilling of the resin surface may occur, as stated above, the residual heat in the fiber mat core should be sufficient to remelt the chilled surface of the resin, thereby aiding the impregnation of the fiber mat core therewith. The pressure of the rolls on the first melted or molten resin coated fiber mat core and the nip of the rolls should be such as to force the thermoplastic resin into the fiber mat core, namely impregnate the fiber mat core, but not so great as to fracture the fibers of the fiber mat core. As stated previously, this is known as "wet-out" of the fibers; thus the term "wet-out" rolls. Also, the speed of the fiber mat core and of the rolls can be so adjusted that excessive chilling would be avoided even if low temperature heated rolls are used.

As stated earlier, alternatively, at least one pair of opposing "wet-out" rolls can be used. However, the number of pairs of rolls used can vary depending on the thickness of the fiber mat core, the speed of the fiber mat layer through the continuous process of this invention and/or the melt viscosities of the thermoplastic resins employed. One could use two or three or more pairs of opposing "wet-out" rolls depending on the above factors.

In addition, if "wet out" rolls are employed, the rolls may be shaping rolls in that the surface of the rolls could be designed and made so as to conform to the desired shape of the final article. This is known as "roll" forming. Thus, the fiber mat core will then take the shape of the contoured rolls as the thermoplastic resin and the fiber mat core passes therebetween, as well as the fiber mat core being impregnated with the first resin. Then, the second thermoplastic resin is applied onto the surface of the heated preshaped resin impregnated fiber mat, which may then be followed by the compression molding of the preformed fiber mat into the final or finished formed article. However, "roll" forming may be sufficient to form the final article without actually advancing to a molding zone. The "roll" forming would, in effect, be a compressing molding step as well. For example, a channel beam could be so made continuously or slabs such as plastic roof tile or siding for buildings could be continuously so formed by "roll" forming. The surface of such rolls may be polished to provide a glossy or smooth surface such as would be wanted for a Class A surface, or the surface of the rolls may have a mat finish as may be desired for roof tile.

If "wet-out" rolls are employed, the fiber mat core may become somewhat compressed as it passes through the nip of the "wet-out" rolls. However, the fiber mat core, as it leaves the "wet-out" roll zone expands, commonly known as "lofting" which may be due to the residual heat in the fiber mat and the latent recoil forces within the fibers. The fiber mat core is porous in that it contains voids or openings in the fiber mat core, evening though it becomes impregnated with the first thermoplastic resin. Even as the fiber mat layer leaves the extrusion zone where a second thermoplastic resin is applied onto the top of and/or bottom of the fiber mat core, having in combination therewith the first resin, the structure is still porous in that the structure contains pores or voids or openings. Upon molding thereof, the structure may be non-porous depending on the fiber content as stated previously herein.

The fiber mat core after the first thermoplastic resin is applied is porous in that it contains voids or openings in the structure and remains as such until it is molded. Upon molding or "roll" forming of the fiber mat core and thermoplastic resins into the final shape, it may become a non-porous article essentially free of voids or openings. however, the question of the final article being essentially non-porous depends upon the fiber content of the final article to be prepared by the process of this invention. If the fiber content is high, the final article, while being impervious to air or water, would be classified as porous in that it would contain openings or voids within the core of the final article after molding. However, the surfaces would be free of voids or openings and would be nonporous. On the other hand, if the fiber content is low, the finished article, including the core, would be essentially non-porous upon molding.

The fiber mat employed in the practice of this invention preferably consists of glass fibers of about 1/4" to about 2" long and may have a nominal length of about 1/2". Generally, glass fibers are the preferred fibers, but other fibers are combinations of fibers may be employed and used such as carbon fibers, mineral fibers, high temperature organic fibers, etc. The fibers employed in preparing the fiber mat of this invention are high aspect ratio fibers, wherein the ratio of length to diameter or thickness ratio is greater than 1 and preferably 10 or greater. If the end product is to be employed for electrical uses, it may be preferred to use fibrous glass filaments comprised of lime-aluminum borosilicate glass that is relatively soda free. this is known as "E" glass. However, other glasses are useful such as the low soda glass known as "C" glass where electrical properties are not so important. Also useful are the "S" glasses. The glass filaments are made by standard processes, e.g., by steam or air blowing, flame blowing and mechanical pulling. Generally, the preferred method for making glass filaments for plastic reinforcement is the mechanical pulling process. The filament diameters range from about 5 microns ($\mu$ m) to about 30 microns ($\mu$ m) and may even be finer, but this is not critical to the present invention.

While chopped glass fibers have been described above, other glass fibers can be used to make up the fiber mat core such as continuous random glass fibers or a combination of chopped glass fibers and continuous random glass fibers may be employed herein or any combination thereof with other forms of the glass fibers or other fibers. The preferred fiber mat is one made up of chopped glass fibers as described previously. The glass fibers in the fiber mat core may be essentially fully dispersed glass fibers or may contain bundles of glass fibers or a combination of both, depending on the end use of the article being so formed.

The number of layers of fiber mats employed in the practice of this invention is at least one layer. However, more than one layer may be employed such as two or three or more layers of fiber mat, depending on the desired thickness of the ultimate article being molded. In addition, the thickness of the fiber mat layer can vary depending on the parameters of the end use of the composite as stated above. Regardless of the number of layers of fiber mat employed, the fiber mat core may be coated with the first thermoplastic resin on at least one surface thereof, but may be coated on both outer surfaces. If more than one fiber mat layer is employed, the first thermoplastic resin may be applied on the outer surfaces, as well as between surface or surfaces of fiber mat layers. Again, where the first thermoplastic resin is deposited depends on the parameters of the process of this invention, the speed of the process, the melt viscosity of the first thermoplastic resin used for impregnation the fiber mat and/or the desired shape of the finished article.

The thermoplastic resins that can be used in the present invention may be any of the thermoplastic resins and depends primarily on the end application of the molded part or article. The thermoplastic resins that may be employed as the first thermoplastic resin and/or as the second thermoplastic resin may be the same or different and may be, for example, an aromatic polycarbonate having an intrinsic viscosity of about at least 0.40 deciliters/gram as measured in methylene chloride at 25°C, polyethylene (PE), polystyrene, copolymers and terepolymers of styrene copolymerized with other monomers such as acryolonitrile, butadiene, methymethacrylate, ethylmethacrylate, ethyl methylmethacrylate, etc., high impact polystyrene which is a polybutadiene with styrene monomer polymerized thereon, polybutylene terephthalate, polyethylene terephthalate, blends of polybutylene terephthalate (PBT) and polyethylene terephthale (PET), polypropylene, polypropylene terephthalate (PPT), poly(l,4 cyclo- hexanedimethanol) terephthalate, polyetherimide, polyetherimide esters, polyether, polyether ester, polyphenylene ether (PPE), crystalline or amorphous polyamides (PA), blends of polyphenylene ether and styrene polymers such as polystyrene or high impact polystyrene, etc., or blends of any of the above thermoplastic resins. The first thermoplastic resin and the second thermoplastic resin, as stated previously, may be the same or different resins, may be of the same or different melt viscosities, or may be of the same or different molecular weights. If the thermoplastic resins are to be each an aromatic polycarbonate resin for example, it is preferred that the first thermoplastic polycarbonate have an intrinsic viscosity of less than about 0.5 dl/g and the second thermoplastic polycarbonate have an intrinsic viscosity greater than 0.5 dl/g. Another combination is using as the first thermoplastic resin a blend of polyphenylene ether and a high impact polystyrene (NORYL® resin sold by General Electric Company), and as the second thermoplastic resin an aromatic polycarbonate (LEXAN® 100 resin sold by General Electric Company having an intrinsic viscosity (IV) of about 0.55 deciliters/gram as determined in methylene chloride at 25°C). Yet another system that can be successfully employed is a combination wherein the first and second thermoplastic resins are a blend of an aromatic polycarbonate, polybutylene terephthalate and an impact modifier (XENOY® resin sold by General Electric Company). Various other combinations of resin systems can be employed in the practice of this invention such as those listed below:

First Resin                          Second Resin

• Polycarbonate                      XENOY® resin
  (IV 0.48 dl/gram)

• NORYL® resin                       NORYL® resin
• VALOX® 295 resin                   VALOX® 315 resin
  (polybutylene                      (same, but IV 0.7 dl/g)
  terephthalate [PBT]
  IV 0.50 dl/g as
  determined in a 60:40
  phenol/tetrachloroe-
  thane at 23°-30° C)

• PBT/PET                            Polycarbonate
  (50 wt. %/50 wt. %                 (IV 0.55 dl/g)
  IV 0.45 dl/g)
• NORYL® resin                       PPE/PA
                                     (70 wt. %/30 wt. %)

• PA                                 PA
• PET                                PET
• PA (6,6)                           PPE/PA
                                     (70 wt. %/30 wt. %)

• PPE/PBT                            NORYL® resin
• PPE/PET                            NORYL® resin
• PPE/PET                            PPE/PET
• PPE/PET/PBT                        NORYL® resin
• NORYL® resin                       PPE/PET/PBT

In addition, one employing polyethylene terephthalate (PET) alone that is either the fiber mat core impregnating resin and/or the surface resin, nucleating agents can be employed which enhance the molding of the article of this invention. Polyethylene terephthalate resin is generally a difficult moldable resin, and the use of a nucleating agent enhances the faster crystallization of the resin. The greater the degree of crystallization of the PET, the better are its properties in the molded state such as heat distortion temperature, melting temperature and other properties.

Many other combinations of thermoplastic resin may be employed in the practice of this invention without detracting from the scope or objective of the invention. The compositions of the VALOX®, XENOY®, NORYL®, and LEXAN® resins are as previously described herein.

While it is preferred that the second thermoplastic resin is generally a neat resin in that it contains no fillers or reinforcing agents, such thermoplastic resin employed as the second thermoplastic resin may contain fine particulate fillers or reinforcing agents such as clay, mica, wollastonite, carbon black, calcium carbonate, magnesium carbonate, or other mineral fillers, providing that the filler particles or reinforcing agent particles are substantially smaller in size than the thickness of the second thermoplastic resin being applied onto the surface of the first thermoplastic resin coating or the impregnated fiber mat core, as it leaves the "wet-out" roll-zone, whichever the case may be. This second thermoplastic resin containing fine particles should, preferably, not contain high aspect ratio fillers or reinforcing agents as to protrude from the surface of the finished article, particularly if a Class A surface is wanted.

The molds employed in the present invention are compression molding molds or "roll" forming "molds" as described previously. In the case of the compression molds, the inner surface of the mold may be metal surfaces, or one surface may be metal and the other surface may be a silicone rubber surface or a hard rubber surface or a cross-linked butadiene rubber surface, or it may be a flexible diaphragm surface with a controlled heated hydraulic fluid backing. The molding process with a mold surface other than metal is known as soft surface molding wherein such surface is deformable. This molding technique is being used successfully. When using hydraulic fluid backing and a soft silicone rubber surface or flexible diaphragm, the temperature of the hydraulic fluid can be controlled to match the cooling rate of the surface of the article which is against a metal surface, whereas the other surface of the article is against the silicone rubber surface. Alternatively, very high cooling rates can be achieved or the temperature of the hydraulic fluid can be changed rapidly which would permit preheating the rubber or soft surface to prevent premature cooling of the resin surface of the article being formed during molding, followed by rapid cooling to minimize cooling/cycle time. It is preferable that full compression of the fiber mat core and resin during molding occur in order to achieve certain optimum mechanical properties of the final article prepared in accordance with this invention.

In the case of "roll" forming, the same applies as above with compression molding in that the roll surfaces may be either all metal or all flexible (rubber surfaces) or one surface metal, and the opposing roll surface flexible. However, in roll forming, it is preferable that at' least one roll surface be flexible.

While it is preferable to apply the second thermoplastic resin on both surfaces of the fiber mat core, just one surface thereof may be thermoplastic resin applied thereon. This, however, depends on the thickness of the fiber mat core in the final molded article or the thickness of the resin surface versus the thickness of the molded article. It may also depend on the end use or application of the article as whether one or both surfaces would have the second thermoplastic resin applied to one or both surfaces of the fiber core in the extrusion zone.

Therefore, in the present invention, it is to be understood by those skilled in the art that various changes may be made in the particular embodiments described above without departing from the spirit and scope of the invention as defined in the appended claims.

## Claims

1. A continuous process for producing a molded thermoplastic resin fiber reinforced article comprising a fiber mat core and thermoplastic resin wherein the surface of the molded article has a high concentration of thermoplastic resin, which process comprises continuously applying a first thermoplastic resin onto at least one surface of a fiber mat core, continuously applying a second thermoplastic resin onto at least one surface of the fiber mat core and first thermoplastic resin, passing the combination of fiber mat core with first and second thermoplastic resin to a molding zone and then molding the combination thereof under pressure and heat into a molded thermoplastic resin fiber reinforced article having on at least one surface thereof a high concentration of the second thermoplastic resin; provided that at least one thermoplastic resin is selected from the group consisting of film and powdered thermoplastic resin.

2. The process of claim 1 wherein the fiber mat core consists essentially of at least two layers of fiber mat.

3. The process of claim 1 wherein the first thermoplastic resin and the second thermoplastic resin are the same thermoplastic resin.

4. The process of claim 1 wherein the first thermoplastic resin is a film of an aromatic polycarbonate resin having an intrinsic viscosity of less than about 0.5 dl/gram and the second thermoplastic resin is a molten aromatic polycarbonate resin having an intrinsic viscosity of greater than about 0.5 dl/gram.

5. The process of claim 1 wherein the first thermoplastic resin is an aromatic polycarbonate in powdered form.

6. The process of claim 5 wherein the combination of fiber mat core and first thermoplastic resin, which is aromatic polycarbonate film, are heated to a temperature sufficient to melt the aromatic polycarbonate film and to heat the fiber mat core to processing temperature.

7. The process of claim 6 wherein the heated fiber mat core and melted aromatic polycarbonate film are passed through the nip of at least one pair of opposing heated wet-out rolls under sufficient pressure to impregnate the fiber mat core with the aromatic polycarbonate resin.

8. The process of claim 1 wherein a material selected from the group consisting of powdered pigment and a blend of a powdered pigment and a powdered thermoplastic resin is applied, prior to molding, to the surface of the combination of fiber mat core and first and second thermoplastic resin having the high concentration of the second thermoplastic resin.

9. The product prepared by the process of claim 8.

10. The process of claim 1 wherein the second thermoplastic resin applied to the fiber mat core is a film and the first thermoplastic resin is in the melted state.

11. The process of claim 10 wherein the fiber mat core having the first thermoplastic resin film applied onto at least one surface of the fiber mat core, after heating, is passed between at least two opposing heated wet-out rolls, wherein the temperature of the surface of the rolls are such as to avoid sticking of the first thermoplastic resin to the surface of the rolls and wherein the pressure of the rolls on the fiber mat core and melted first thermoplastic resin is sufficient to force said thermoplastic resin into the fiber mat core in order to coat the fiber surfaces thereof.

12. The process of claim 1 wherein both the first and second thermoplastic resin are in film form.

13. The process of claim 11 wherein the combination is heated to a temperature sufficient to melt at least the first thermoplastic film and to heat the fiber mat core to processing temperature prior to molding thereof, which processing temperature is above the melting temperature of the thermoplastic resins.

14. A continuous process for producing a molded thermoplastic fiber reinforced article comprising a fiber mat and thermoplastic resin wherein the surface of the molded article has a high concentration of thermoplastic resin, which process consists essentially of:
applying a first thermoplastic resin film onto at least one surface of a fiber mat core,
heating the fiber mat core and thermoplastic resin film to a temperature sufficient to melt the thermoplastic resin film and to also heat the fiber mat core to processing temperature, which processing temperature is above the melting temperature of the thermoplastic resins,
passing the heated fiber mat core and melted resin film to a zone wherein a second thermoplastic resin film is applied to at least one surface of the fiber mat core and melted resin film,
passing the combination thereof to a molding zone wherein the combination is molded under heat and pressure to form the thermoplastic resin fiber reinforced article having at least one surface thereof being a high concentration of the second thermoplastic resin.

15. The process of claim 13 wherein the first thermoplastic resin film is applied to both the top and bottom surface of the fiber mat core.

16. The process of claim 13 wherein the fiber core consists of chopped glass fibers of about 1/8" to about 2" in length.

17. The product prepared by the process of claim 14.

18. The process of claim 14 wherein a material selected from the group consisting of powdered pigment and a blend of powdered pigment and a powdered thermoplastic resin is applied to the surface of the combination of fiber mat core and first and second thermoplastic resin having the high concentration of the second thermoplastic resin prior to the molding of the said combination.

19. The product prepared by the process of claim 18.

EP 0 640 466 A1

**European Patent Office**

**EUROPEAN SEARCH REPORT**

Application Number

EP 94 30 5442

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE-A-41 12 532 (BAYER)<br>* column 4, line 4 - line 44; claims 3,5,8 * | 1-19 | B29C70/50<br>B29C70/08<br>//B29K101:12 |
| Y | EP-A-0 235 794 (MONTEDISON)<br>* column 5, line 44 - column 6, line 25; figure 1 * | 1-19 | |
| Y | EP-A-0 389 798 (GENERAL ELECTRIC)<br>* column 6, line 32 - line 50 *<br>* column 7, line 7 - line 10; figures 1C,1D * | 1-19 | |
| X | US-A-4 469 543 (SEGAL ET AL.)<br>* column 4, line 52 - column 6, line 55; figure 1 * | 1-19 | |

TECHNICAL FIELDS SEARCHED (Int.Cl.6)

B29C

The present search report has been drawn up for all claims

| Place of search | Date of completion of the search | Examiner |
|---|---|---|
| THE HAGUE | 15 December 1994 | Attalla, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document